# EUROPEAN PATENT SPECIFICATION

(11) **EP 0 363 902 B1**
(45) Date of publication and mention of the grant of the patent: **19.07.1995**
(21) Application number: 89118807.0
(22) Date of filing: 10.10.1989
(51) Int. Cl.: G05B 19/406

(54) **Method of detecting wear of cutting tool**
Methode zur Ermittlung des Verschleisses von Schneidwerkzeugen
Méthode de détection de l'usure d'outil coupant

(30) Priority: 14.10.1988 JP 259850/88
(43) Date of publication of application: 18.04.1990
(73) Proprietor: SUMITOMO ELECTRIC INDUSTRIES, LTD., Osaka-shi, Osaka 541 (JP)
(72) Inventor: Nakamura, Takashi c/o Nagoya Inst. of Technology, Nagoya-shi Aichi-ken (JP)
(74) Representative: Kirschner, Klaus Dieter, Dipl.-Phys.

(56) References cited:
- PROCEEDINGS OF THE INSTITUTION OF ELECTRICAL ENGINEERS. vol. 118, no. 2,February 1971, STEVENAGE GB pages 381 - 386; A. J. WILKINSON: "CONSTRICTION-RESISTANCE CONCEPT APPLIED TO WEAR MEASUREMENT OF METAL-CUTTING TOOLS"
- MECANIQUE MATERIAUX ELECTRICITE. nos. 301,302, Jan.- Feb. 1975, PARIS FR pages34 - 36; B. ROUMESY ET AL: "Test rapide d'usinabilité par mesure thermoélectrique"

## Description

### BACKGROUND OF THE INVENTION

### Field of the Invention

The present invention relates to a method of measuring wear of a cutting tool during cutting work.

### Description of the Background Art

In a generally known method of measuring wear of a cutting tool during cutting work, acoustic emission (AE) is utilized as disclosed in Japanese Patent Laying-Open Gazette No. 13858/1982, for example. This AE method is adapted to detect acoustic emission generated during cutting work upon breaking of a cutting tool by an AE sensor, thereby to measure wear thereof. However, it is impossible to accurately detect only such acoustic emission since various noises are made on the jobsite of actual cutting work. Thus, the AE method is insufficient in accuracy.

Another conventional method is adapted to measure wear by measuring cutting force caused in cutting work, as disclosed in Japanese Patent Laying-Open Gazette No. 5252/1980 or 218053/1987, for example. However, such cutting force is varied with configurations of cut positions of workpieces etc. Thus, this method is not employable unless workpieces are regularly cut in the same configuration.

In still another conventional method, a cutting tool is formed of a material containing a radioactive isotope such as radioactive cobalt, and reduction of the radioactive isotope is measured through change in radioactivity, thereby to detect wear of the cutting tool. However, it is clear that such a method is unpreferable in consideration of sanitation of the work environment.

The article "Constriction-resistance concept applied to wear measurement of metal-cutting tools" in the proccedings of the institution of electrical engineers, vol. 118, no. 2, February 1971, Stevenage GB, pages 381-386 by A.J. Wilkonson discloses a method to calculate the amount of wear on a cutting tool measuring the contact resistance.

The article "Test rapide d'usinabilité par mesure thermoelectrique" in Mecanique Materiaux Electricité, nos. 301, 302, Jan.-Feb. 1975, Paris Fr, pages 34 - 36 by B. Roumesy et al. discloses a method to measure the wear of a tool taking into account the thermoelectromotive force.

### SUMMARY OF THE INVENTION

An object of the present invention is to provide a method which can accurately and stably detect wear of a cutting tool with no influence by disturbance factors such as the work environment of cutting work, dispersion in hardness or confiquration of workpieces, etc.

The inventive method is characterized in claim 1.

The material for the cutting tool is not particularly restricted in the present invention, while an insert may be prepared from cemented carbide or coated cemented carbide, for example.

According to the present invention, contact resistance between a cutting tool and a workpiece may be measured by a general method of measuring electrical resistance such as that called a four terminal method, for example.

The principle of the present invention, in which wear can be detected by measuring contact resistance, is now described. Assuming that a represents the radius of a contact point between two conductors A and B, contact resistance R between the conductors A and B is expressed as follows:$\text{R =} \frac{\text{ρ}}{\text{2a}}$
where ρ represents resistivity.

Such contact resistance, which is caused since a current fed from a wide passage is abruptly narrowed at the contact point, is called spreading resistance.

As cutting work progresses to increase wear of a cutting tool, the area of a contact part between the cutting tool and a workpiece is increased. Thus, contact resistance between the cutting tool and the workpiece is reduced. Therefore, the wear of the cutting tool can be evaluated by measuring the contact resistance.

In general, the contact part between the cutting tool and the workpiece is heated to an extremely high temperature of 500 to 1000°C during the cutting work. Therefore, thermoelectromotive force is generated between the cutting tool and the workpiece. Thus, potential difference Em measured between the cutting tool and the workpiece includes such thermoelectromotive force Et. Hence, contact resistance R between the cutting tool and the workpiece can be evaluated as follows:$\text{R =} \frac{\text{Em - Et}}{\text{I}}$
where I represents the current flowing between the cutting tool and the workpiece.

The aforementioned thermoelectromotive force can be detected by interrupting the current flowing between the cutting tool and the workpiece and measuring potential difference developed across the same.

A preferred embodiment of the present invention comprises steps of feeding a current between a cutting tool and a workpiece to evaluate potential difference developed across the cutting tool and the workpiece and the current value, interrupting the current flowing between the cutting tool and the workpiece to evaluate thermoelectromotive force generated by contact between the cutting tool and the workpiece, measuring contact resistance between the cutting tool and the workpiece by subtracting the thermoelectromotive force from the measured potential difference and dividing the result by the current value, and detecting wear of the cutting tool from the measured contact resistance.

According to the inventive method, the wear of the cutting tool can be stably and accurately measured during cutting work on the workpiece with an extremely simple apparatus.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a circuit diagram showing an embodiment of the inventive detecting method;
Fig. 2 illustrates relations between contact resistance values and cut distances in the embodiment of the present invention;
Fig. 3 is a chart showing change in potential difference in the embodiment of the present invention; and
Fig. 4 is a graph showing relations between contact resistance and flank wear.

### DESCRIPTION OF THE PREFERRED EMBODIMENT

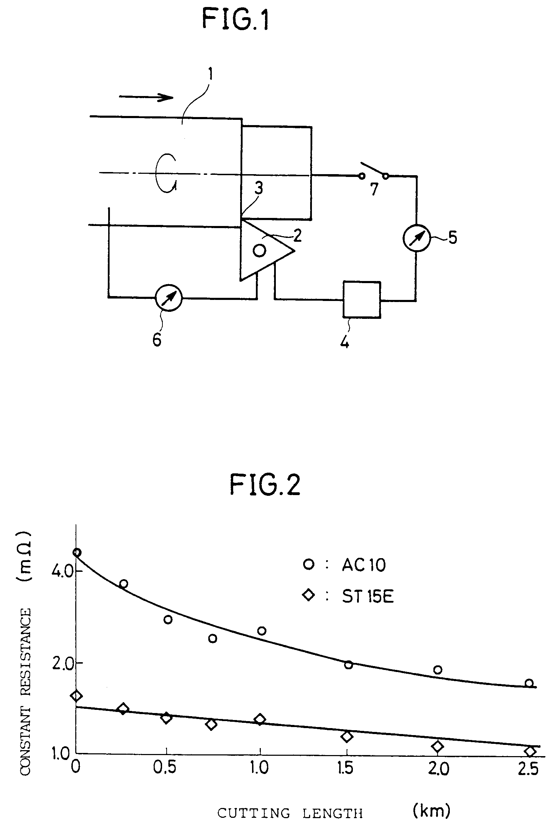

Fig. 1 is a circuit diagram showing an embodiment of the inventive method of detecting wear. Referring to Fig. 1, a workpiece 1 is cut by an insert 2, which serves as a cutting tool. The workpiece 1 is in contact with the insert 2 at a contact part 3. A power source 4 is connected between the insert 2 and the workpiece 1, and this power source 4 is connected to the workpiece 1 through an ampere meter 5 and a switch 7. Further, a voltmeter 6 is so connected as to measure potential difference between the insert 2 and the workpiece 1. The switch 7 is so closed that a current from the power source 4 flows between the workpiece 1 and the insert 2. The ampere meter 5 reads the current value at this time, and the voltmeter 6 reads the potential difference between the workpiece 1 and the insert 2.

Then the switch 7 is opened to interrupt the current flowing between the workpiece 1 and the insert 2. In this state, the voltmeter 6 reads the potential difference between the workpiece 1 and the insert 2, thereby to evaluate thermoelectromotive force Et. Contact resistance R can be evaluated by subtracting the thermoelectromotive force Et from potential difference Em developed across the workpiece 1 and the insert 2 when the current flows from the power source 4, and dividing the result by the current value I read by the ampere meter 5.

Examples of inserts were prepared from AC10 and ST15E of type No. TNMN160408 by Sumitomo Electric Industries, Ltd. to cut workpieces of S45C with holders of FN21R-44A, and relations between cutting length and contact resistance values were measured through the apparatus shown in Fig. 1. Cutting conditions were as follows:
Cutting Velocity: 100 m/min.
Feed Rate: 0.30 mm/rev.
Depth of Cut: 2 mm
The insert of AC10 was formed of cemented carbide coated with aluminum oxide through TiC. The insert of ST15E was formed of general cemented carbide of grade P20 under ISO standards.

Fig. 2 shows the relations between the contact resistance values and the cutting length thus measured. As obvious from Fig. 2, it is understood that an insert of coated cemented carbide exhibits a remarkable effect as compared with that of general cemented carbide.

An insert prepared from AC10 of type No. CNMG120408N-UG by Sumitomo Electric Industries, Ltd. was employed to cut a workpiece of S45C with a holder of PCLNR2525-43. The insert of AC10 was formed of cemented carbide coated with aluminum oxide through TiC, similarly to the above. Cutting conditions were as follows:
Cutting Velocity: 250 m/min.
Feed Rate: 0.36 mm/rev.
Depth of Cut: 2 mm

A direct current of 5 A was fed between the insert and the workpiece by an apparatus which was based on a principle similar to that of the apparatus shown in Fig. 1, to measure potential difference. In more concrete terms, a switch of the apparatus was opened every contact period to measure thermoelectromotive force, thereby to evaluate potential difference developed during cutting work.

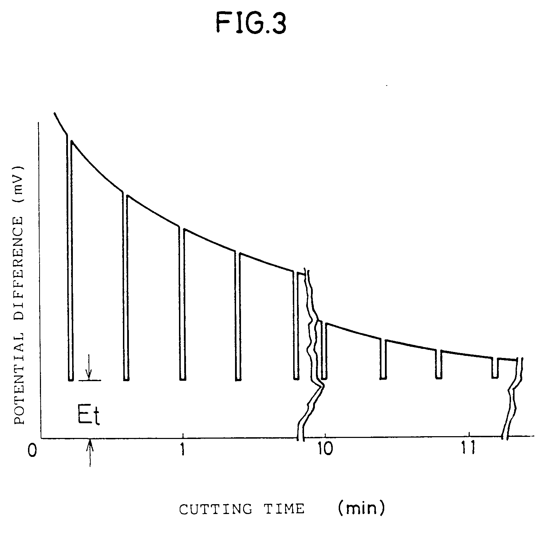

Fig. 3 is a chart showing change of the potential difference thus measured. As shown in Fig. 3, the potential difference was abruptly reduced every constant period, in correspondence to opening of the switch 7. Electromotive force Et measured when the switch 7 was turned off corresponds to the thermoelectromotive force.

Thus, the potential difference was evaluated while measuring the thermoelectromotive force Et, to evaluate contact resistance.

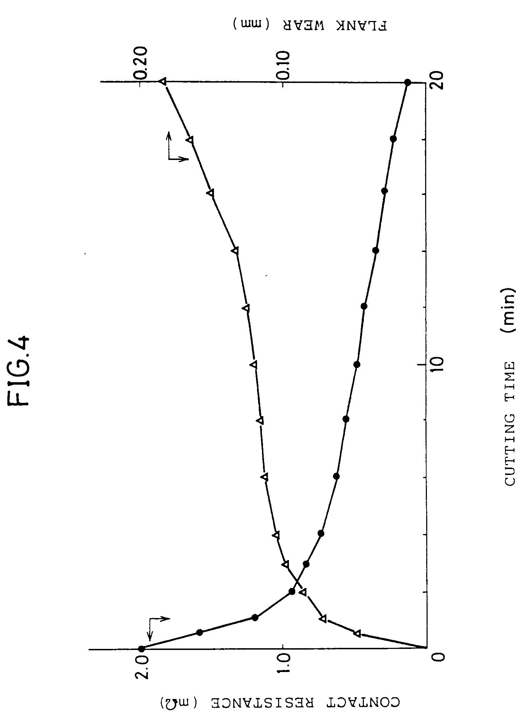

Fig. 4 shows the change of the contact resistance thus evaluated.

An insert absolutely identical to that of the above embodiment was employed to cut a workpiece under the same conditions, thereby to evaluate flank wear every constant cutting period. Fig. 4 shows the results thus obtained. As obvious from Fig. 4, it is understood that there are constant relations between the contact resistance values and the flank wear values. Thus, wear of an insert can be evaluated by measuring contact resistance according to the present invention.

## Claims

1. A method of detecting wear of a cutting tool for cutting a workpiece (1), from a measured contact resistance, said method comprising the steps of:
feeding a current between said cutting tool (2) and said workpiece (1) to evaluate a potential difference developed across said cutting tool and said workpiece and the value of the contact resistance, the method being; characterized by
interrupting said current flowing between said cutting tool and said workpiece to evaluate a thermoelectromotive force generated by contact between said cutting tool and said workpiece;
subtracting said thermoelectromotive force from said potential difference and dividing the result by said current value thereby to measure the contact resistance between said cutting tool and said workpiece; and
detecting wear of said cutting tool from said measured contact resistance.

2. A method in accordance with claim 1, wherein said cutting tool (2) is formed of coated cemented carbide.

3. A method in accordance with claim 1, wherein said cutting tool (2) is formed of cemented carbide.

4. A method in accordance with claim 1, wherein said contact resistance is measured by a four terminal method.

## Patentansprüche

1. Methode zur Ermittlung des Verschleisses von Schneidwerkzeugen zum Schneiden eines Werkstücks (1) aus einem gemessenen Kontaktwiderstand, wobei die Methode die Schritte umfaßt:
Einspeisen eines Stromes zwischen dem Schneidewerkzeug (2) und dem Werkstück (1), um eine Potentialdifferenz, die über dem Schneidewerkzeug und dem Werkstück liegt, und den Wert des Kontaktwiderstands zu ermitteln, wobei die Methode **gekennzeichnet ist durch**
Unterbrechen des Stromes, der zwischen dem Schneidewerkzeug und dem Werkstück fließt, um eine thermoelektromotorische Kraft zu ermitteln, die durch den Kontakt zwischen dem Schneidewerkzeug und dem Werkstück erzeugt wird;
Abziehen der thermoelektromotorischen Kraft von der Potentialdifferenz und Teilen des Ergebnisses durch den Stromwert, um dadurch den Kontaktwiderstand zwischen dem Schneidewerkzeug und dem Werkstück zu messen; und
Ermitteln des Verschleisses des Schneidewerkzeugs aus dem gemessenen Kontaktwiderstand.

2. Methode nach Anspruch 1, worin das Schneidewerkzeug (2) aus beschichtetem Sinterkarbid gebildet wird.

3. Methode nach Anspruch 1, worin das Schneidewerkzeug (2) aus Sinterkarbid gebildet wird.

4. Methode nach Anspruch 1, worin der Kontaktwiderstand durch eine Vierpol-Methode gemessen wird.

## Revendications

1. Procédé de détection de l'usure d'un outil de coupe destiné à la coupe d'une pièce (1), à partir d'une résistance de contact qui est mesurée, le procédé comprenant les étapes suivantes :
la transmission d'un courant entre l'outil de coupe (2) et la pièce (1) pour l'évaluation d'une différence de potentiel créée entre l'outil de coupe et la pièce et de la valeur de la résistance de contact, le procédé étant caractérisé par les étapes suivantes :
l'interruption du courant circulant entre l'outil de coupe et la pièce pour l'évaluation d'une force thermoélectromotrice créée par contact entre l'outil de coupe et la pièce,
la soustraction de la force thermoélectromotrice de la différence de potentiel et la division du résultat par la valeur du courant, afin que la résistance de contact entre l'outil de coupe et la pièce soit mesurée, et
la détection de l'usure de l'outil de coupe d'après la résistance de contact ainsi mesurée.

2. Procédé selon la revendication 1, dans lequel l'outil de coupe (2) est formé d'un carbure fritté revêtu.

3. Procédé selon la revendication 1, dans lequel l'outil de coupe (2) est formé d'un carbure fritté.

4. Procédé selon la revendication 1, dans lequel la résistance de contact est mesurée par un procédé à quatre bornes.
